# FASCICULE DE BREVET EUROPEEN

(11) **EP 4 401 952 B1**
(45) Date de publication et mention de la délivrance du brevet: **25.11.2026**
(21) Numéro de dépôt: 22789641.2
(22) Date de dépôt: 16.09.2022
(51) Int. Cl.: B29C 70/38, B29C 70/54, G01N 21/84

(54) **PROCÉDÉ ET SYSTÈME DE CONTRÔLE DE L'APPLICATION D'UN PATCH**
VERFAHREN UND SYSTEM ZUR STEUERUNG DER ANWENDUNG EINES PFLASTERS
METHOD AND SYSTEM FOR CONTROLLING THE APPLICATION OF A PATCH

(30) Priorité: 17.09.2021 FR 2109812
(43) Date de publication de la demande: 24.07.2024
(73) Titulaire: Safran Nacelles, 76700 Gonfreville-l'Orcher (FR)
(72) Inventeur: PROVOST, Benjamin, 77550 MOISSY CRAMAYEL (FR); ROLLAND, Clément, 77550 MOISSY CRAMAYEL (FR); LEBEGUE, Maxime, 77550 MOISSY CRAMAYEL (FR); VENTURE, Renaud, 77550 MOISSY CRAMAYEL (FR)
(74) Mandataire: Casalonga
(86) Numéro de dépôt international: PCT/FR2022/051746
(87) Numéro de publication internationale: WO 2023/041879

(56) Documents cités:
- EP-A1- 3 432 266
- US-A1- 2016 325 509

## Description

### Domaine technique

La présente invention concerne la fabrication de pièces composites et, en particulier, le dépôt de patchs de matière préimprégnée ou adhésives sur une pièce en cours de fabrication.

La présente invention concerne plus particulièrement les systèmes et procédés de contrôle de l'application d'un patch saisi et appliqué par un préhenseur. Un patch a la forme d'un fin matériau dont le caractère pégueux peut être activé par de la chaleur pour que le patch adhère correctement à la pièce cible.

### Techniques antérieures

La pose de patch sur de grandes surfaces est généralement réalisée à l'aide d'un préhenseur permettant de saisir puis de déposer un patch à l'endroit voulu sur la surface de la pièce cible à draper. Les solutions actuelles mettent par exemple en œuvre des préhenseurs pneumatiques, électrostatiques, ou encore mécaniques.

Dans le cas d'un préhenseur pneumatique, le préhenseur saisit le patch par aspiration en créant une dépression qui permet au patch de se plaquer contre le préhenseur jusqu'à ce que le préhenseur soit positionné face à la pièce sur laquelle le patch doit être positionné. Le patch est alors plaqué et légèrement compacté contre la pièce, la dépression est stoppée et le préhenseur se retire, laissant le patch sur la surface cible à draper. Le patch est par exemple un adhésif.

Afin d'augmenter le caractère pégueux et collant d'un patch, pour faciliter son adhérence à la pièce cible, il est utile de l'exposer à une source de chaleur.

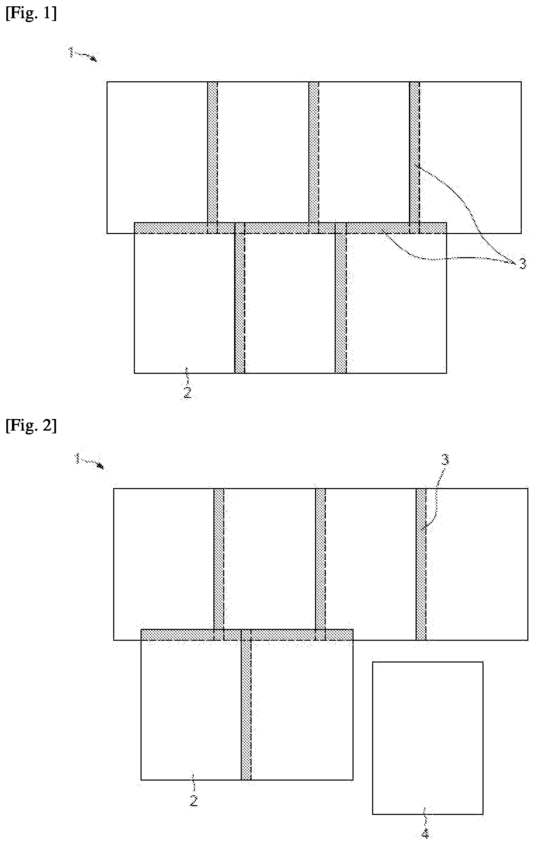

Un patch est par exemple rectangulaire et plusieurs patchs sont posés les uns à côté des autres afin de recouvrir la surface à draper. En particulier, il est préférable de ne laisser aucune portion nue de la surface à draper. Ainsi, les patchs sont placés les uns à côté des autres avec un léger recouvrement entre eux, de sorte que la surface à draper est totalement recouverte et qu'il n'y a pas de discontinuité entre les patchs. Le recouvrement représente par exemple un dixième d'un côté d'un patch. On a représenté sur la figure 1 un assemblage 1 schématique de patchs 2 disposés avec un recouvrement idéal 3.

Cependant, une fois un patch 2 positionné sur la surface à draper, aucun contrôle n'est effectué, hormis celui d'un opérateur à la fin du drapage. Ainsi, des erreurs dans l'application d'un patch peuvent nuire à la pose précise d'un patch et mettre à nu la surface à draper par endroit. De plus, le positionnement peut être mal effectué, le patch peut être mal collé et mal plaqué sur la surface à draper. Un espace de mauvaise dimension peut apparaitre entre deux patchs.

On a représenté sur la figure 2 un assemblage 1 schématique de patchs 2 sur une surface à draper et dont le dernier patch 4 posé ne respecte pas les conditions de recouvrement souhaitées. La surface à draper n'est donc pas conforme et n'est pas exploitable.

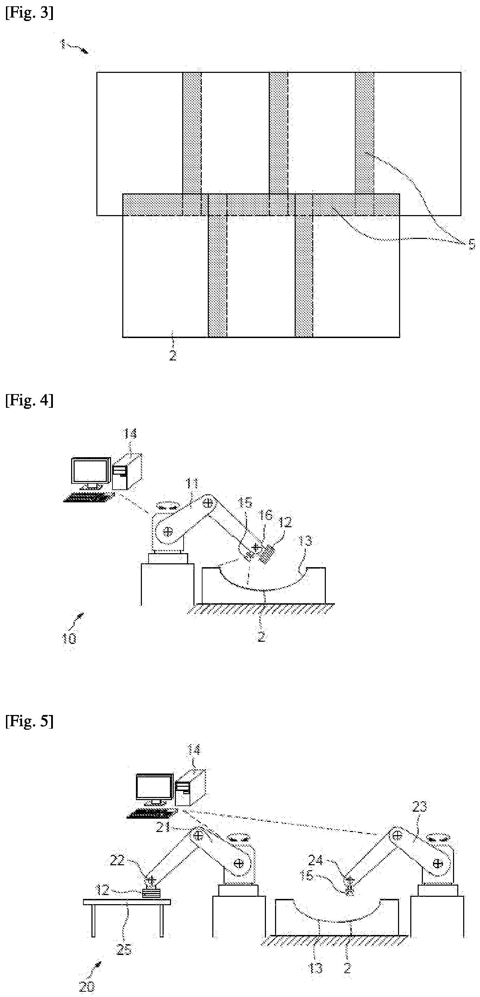

De plus, en fonction de la précision de l'ensemble des systèmes et éléments intervenants dans le procédé d'application du patch, il est nécessaire d'assurer un recouvrement large entre les différents patchs afin de prévenir l'ensemble des imprécisions du système de dépose des patchs. On a représenté sur la figure 3 un recouvrement large 5 entre différents patchs 2 d'un assemblage 1 schématique de patchs. Le recouvrement large 5 génère un surcout ainsi qu'un surpoids de la pièce finale et n'est donc pas optimal.

Le document US2016325509A1 décrit une machine de fabrication de rouleaux de matériau préimprégné, équipée d'un robot configuré pour positionner une pièce de préimprégné à proximité d'une extrémité d'une couche de préimprégné et d'un système d'alignement configuré pour détecter la position de la pièce de préimprégné par rapport à la couche de préimprégné.

Le document EP3432266A1 décrit un procédé de reconnaissance des imperfections d'un matériau composite fibreux déposé sur un outil pour la production d'un composant composite fibreux.

### Exposé de l'invention

La présente invention a donc pour but de pallier les inconvénients précités et d'assurer la conformité de chaque pose de patch automatiquement.

La présente invention a pour objet un procédé automatique de contrôle de l'application d'un patch comprenant les étapes suivantes :
- Pose d'un patch sur une surface à draper au moyen d'un préhenseur et avec recouvrement partiel des patchs adjacents ou sans recouvrement ;
- Acquisition par un moyen de contrôle optique d'au moins une image du patch posé ;
- Détection des défauts de pose du patch par identification de différences d'épaisseur de patch sur la surface à draper à partir de l'au moins une image du patch posé ;
- Cartographie des défauts de pose du patch.

Ainsi, la pose et le contrôle de la bonne application d'un patch ne nécessite pas d'intervention humaine et la cartographie automatique permet de laisser la possibilité d'analyser les occurrences des défauts dans l'application de patchs et ainsi de prendre des actions correctives pour éviter de futurs défauts. Le procédé de contrôle permet d'identifier tout type de non-conformité, telle qu'un mauvais collage ou plaquage de patch sur la surface à draper, ou un mauvais positionnement, ou encore un espace de mauvaise dimension entre deux patchs.

Avantageusement, l'étape d'acquisition d'au moins une image du patch posé s'effectue avec un moyen de contrôle optique ayant un angle de champ plus large que l'angle de champ nécessaire à l'imagerie du patch seul, ou réalisant une image d'angle de champ plus large que l'angle de champ nécessaire à l'imagerie du patch seul par balayage.

Dans un mode de mise en œuvre, le procédé comprend en outre une étape de transmission et d'alerte d'un opérateur ou d'un automate de rectification des défauts après l'étape de cartographie des défauts.

Dans un mode de mise en œuvre particulier, le procédé comprend en outre les étapes suivantes :
- Acquisition d'au moins deux images avec une direction de prise de vue différente lors de l'étape d'acquisition d'au moins une image du patch posé ;
- Reconstruction du patch imagé et de son pourtour en nuage de points en trois dimensions à partir des au moins deux images du patch posé obtenues à l'étape d'acquisition, l'étape de reconstruction étant effectuée avant l'étape de détection des défauts de pose du patch ;
- Recherche de bords du patch imagé dans la reconstruction en nuage de points en trois dimensions, l'étape de recherche de bords étant effectuée avant l'étape de détection des défauts de pose du patch ;
- Extraction de profils en coupe de deux dimensions des bords du patch imagé, l'étape d'extraction de profils étant effectuée avant l'étape de détection des défauts de pose du patch ;
- Lissage des profils en coupe de deux dimensions et analyse itérative de la pente de ces profils de manière à créer des données d'épaisseur de patch sur la surface à draper, cette étape de lissage étant effectuée avant l'étape de détection des défauts de pose du patch.

Avantageusement, l'étape de détection des défauts de pose du patch par identification de différences d'épaisseur de patch sur la surface à draper comprend l'analyse par correspondance des nuances de gris de l'au moins une image du patch posé à une épaisseur de patch.

La présente divulgation a également pour objet un programme d'ordinateur configuré pour mettre en œuvre le procédé tel que défini précédemment, lorsqu'il est exécuté par l'ordinateur.

La présente divulgation a en outre pour objet un support d'enregistrement lisible par ordinateur comprenant des instructions qui, lorsqu'elles sont exécutées par un ordinateur, conduisent celui-ci à mettre en œuvre les étapes du procédé tel que défini précédemment.

L'invention a également pour objet un système de contrôle de l'application d'un patch sur une surface à draper comprenant un préhenseur apte à saisir le patch et le déposer sur la surface à draper, un moyen de contrôle optique de la conformité de la pose d'un patch sur la surface à draper et un moyen de mise en œuvre du procédé tel que défini précédemment.

Dans un mode de réalisation, le système comprend un bras articulé et une tête portée par le bras articulé, la tête comprenant le préhenseur et le moyen de contrôle optique.

Dans un autre mode de réalisation, le système comprend un premier bras articulé comprenant une première tête et un second bras portant une seconde tête, les première et seconde têtes comprenant l'une le préhenseur et l'autre le moyen de contrôle optique.

Avantageusement, le moyen de contrôle optique est monté sur un poteau, ou au plafond, et/ou sur des rails, et/ou sur une structure mobile située au-dessus de la surface à draper.

Avantageusement, le moyen de contrôle optique est un capteur laser ou un capteur à lumière blanche ou une caméra visible ou une caméra stéréoscopique ou un capteur plénoptique ou une caméra infrarouge.

### Brève description des dessins

D'autres buts, caractéristiques et avantages de l'invention apparaîtront à la lecture de la description suivante, donnée uniquement à titre d'exemple non limitatif, et faite en référence aux dessins annexés sur lesquels :
[Fig 1] dont il a déjà été fait mention, illustre un assemblage schématique de patchs disposés avec un recouvrement idéal ;
[Fig 2] dont il a déjà été fait mention, illustre un assemblage schématique de patchs sur une surface à draper dont l'un des patchs est mal positionné ;
[Fig 3] dont il a déjà été fait mention, illustre un assemblage schématique de patchs disposés avec un recouvrement trop important ;
[Fig 4] illustre schématiquement un premier mode de réalisation d'un système de contrôle d'application d'un patch selon l'invention ;
[Fig 5] illustre schématiquement un deuxième mode de réalisation d'un système de contrôle d'application d'un patch selon l'invention ;
[Fig 6] illustre schématiquement une variante du deuxième mode de réalisation d'un système de contrôle d'application d'un patch selon l'invention ; et
[Fig 7] illustre les différentes étapes du procédé de contrôle de l'application d'un patch selon l'invention ;
[Fig 8] illustre schématiquement un assemblage de patchs ainsi qu'une zone d'inspection autour d'un patch ; et
[Fig 9] illustre un exemple de profil en coupe de bord de patch lissé avec recouvrement.

### Exposé détaillé d'au moins un mode de réalisation

On a représenté sur la figure 4 une vue schématique d'un système 10 de contrôle de l'application d'un patch 2 dans un premier mode de réalisation.

Le système 10 est par exemple un automate. Il comprend un bras 11 articulé robotisé portant un préhenseur 12 apte à la préhension et à la pose de patchs 2 sur une surface cible à draper 13. Le préhenseur 12 est par exemple pneumatique, électrostatique, ou encore mécanique.

Un système de chauffage (non représenté) peut être situé à proximité pour augmenter la pégosité et le caractère collant des patchs.

Le système 10 comprend un moyen de mise en œuvre 14 d'un procédé de contrôle de l'application des patchs 2. Le moyen de mise en œuvre 14 du procédé de contrôle est par exemple un ordinateur. Optionnellement, il permet en outre de superviser les opérations de préhension, de chauffage et de pose des patchs 2.

Le système 10 comprend en outre un moyen de contrôle optique 15 de la conformité de la pose d'un patch 2 sur la surface à draper 13. Le moyen de contrôle optique 15 est par exemple un capteur laser, un télémètre laser, ou un capteur à lumière blanche de type confocal, ou une caméra visible, ou une caméra stéréoscopique avec ou sans projection de motifs, ou un capteur plénoptique, ou une caméra infrarouge. Optionnellement le moyen de contrôle optique comprend un moyen d'imagerie par balayage.

Dans ce premier mode de réalisation, le moyen de contrôle optique 15 est porté par le bras 11 robotisé. En particulier, le bras comprend une tête 16 inclinable portant le préhenseur 12 et le moyen de contrôle optique 15. Une fois que le préhenseur 12 a saisi et posé un patch 2 sur la surface à draper 13, la tête 16 s'incline ou pivote et permet au moyen de contrôle optique 15 d'acquérir au moins une image dans le but de contrôler la conformité de la pose du patch 2.

Dans un deuxième mode de réalisation illustré à la figure 5, le système 20 de contrôle de l'application de patch 2 comprend un premier bras 21 articulé robotisé comprenant une première tête 22, ainsi qu'un second bras 23 articulé robotisé portant une seconde tête 24.

Le système 20 comprend également un moyen de mise en œuvre 14 d'un procédé de contrôle de l'application des patchs 2. Le moyen de mise en œuvre 14 du procédé de contrôle est par exemple un ordinateur. Optionnellement, il permet en outre de superviser les opérations de préhension, de chauffage et de pose des patchs 2.

La première tête 22 comprend un préhenseur 12 apte à saisir le patch 2 sur une table de travail 25 et à déposer ledit patch 2 sur une surface à draper 13. Le préhenseur 12 est par exemple pneumatique, électrostatique, ou encore mécanique.

La seconde tête 24 comprend un moyen de contrôle optique 15 de la conformité de la pose d'un patch 2 sur la surface à draper 13. Le moyen de contrôle optique 15 est par exemple un capteur laser, un télémètre laser, ou un capteur à lumière blanche de type confocal, ou une caméra visible, ou une caméra stéréoscopique avec ou sans projection de motifs, ou un capteur plénoptique, ou une caméra infrarouge. Optionnellement le moyen de contrôle optique 15 comprend un moyen d'imagerie par balayage.

Le moyen de mise en œuvre 14 du procédé de contrôle synchronise par exemple les deux bras 21 et 23 de sorte que le second bras 23 portant la seconde tête 24 vient contrôler la pose de patch 2 à l'aide du moyen de contrôle optique 15 pendant que le premier bras 21, au moyen du préhenseur 12, vient saisir un nouveau patch 2 sur la table de travail 25.

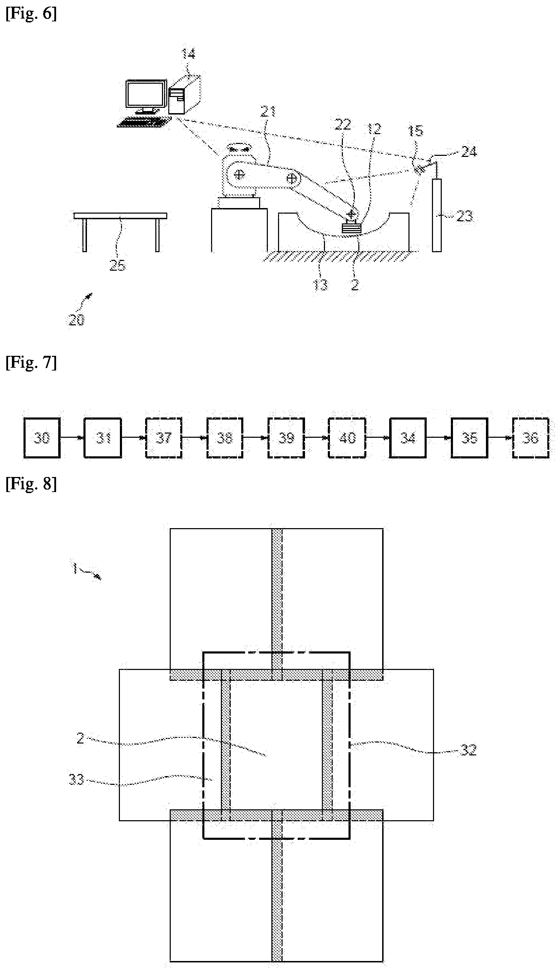

Dans une variante du deuxième mode de réalisation illustrée à la figure 6, le deuxième bras 23 n'est pas articulé ni robotisé. Le deuxième bras 23 est fixe et comprend une seconde tête 24 comprenant un moyen de contrôle optique 15 de la conformité de la pose d'un patch 2 sur la surface à draper 13. En particulier, le moyen de contrôle optique 15 a un angle de champ pouvant imager toute la surface à draper 13. Alternativement, le moyen de contrôle optique 15 a un angle de champ réduit et la seconde tête 24 est inclinable de sorte que toute la surface à draper 13 peut être imagée par le moyen de contrôle optique 15.

Dans chaque mode de réalisation, le système 10 ou 20 comprend optionnellement un automate de rectification des défauts (non représenté) afin de repositionner le patch 2 pour lequel un défaut de pose est détecté.

De plus, dans chaque mode de réalisation, le système 10 ou 20 comprend optionnellement un ou plusieurs autres moyens de contrôle optique 15 afin de pouvoir imager le patch 2 à contrôler de plusieurs directions de prise de vue différentes.

On a représenté sur la figure 7 les différentes étapes du procédé de contrôle de l'application d'un patch 2 mis en œuvre avec le moyen de contrôle optique 15. Ce procédé est mené pour chaque patch 2 appliqué sur la surface à draper 13.

Le but de ce procédé est de détecter et de cartographier des défauts de pose de patchs 2. En particulier, les défauts pouvant être détectés sont un mauvais positionnement du patch 2, une mauvaise orientation du patch 2, l'absence de recouvrement entre un patch et un patch adjacent, la mauvaise adhésion d'un patch à la surface à draper 13, le repli du patch 2 sur lui-même, ou encore l'absence de patch sur une zone de la surface à draper 13. En particulier, les défauts détectés ont une taille comprise entre 0.1 millimètre et 10 centimètres. La technologie du moyen de contrôle optique 15 doit permettre d'atteindre une telle précision.

Dans une première étape 30 du procédé, on pose un patch 2 sur une surface à draper 13 au moyen du préhenseur 12 et avec recouvrement partiel des patchs adjacents. La pose du patch 2 peut également s'effectuer sans recouvrement de patchs adjacents.

Puis, on effectue une étape 31 d'acquisition d'au moins une image du patch 2 posé à l'aide du moyen de contrôle optique 15. L'acquisition s'effectue par exemple avec un moyen de contrôle optique 15 ayant un grand angle de champ et imageant le patch 2 posé ainsi que son pourtour afin de s'assurer du recouvrement avec les patchs adjacents. Alternativement, l'acquisition s'effectue avec un moyen de contrôle optique 15 ayant un petit angle de champ. Il est alors nécessaire de balayer le patch 2 et le pourtour du patch à imager et de reconstituer une image grand champ à partir des images petit champ. Dans chaque alternative, on obtient au moins une image totale du patch 2 et de son pourtour correspondant à une zone d'inspection.

Le pourtour du patch est défini ici comme l'espace à proximité des bords du patch 2. La largeur du pourtour correspond par exemple à une largeur jusqu'à cinq fois égale à une largeur de tolérance, la largeur de tolérance étant par exemple la largeur maximale tolérée de recouvrement au-delà de laquelle le recouvrement est estimé être trop large. Cette largeur de pourtour permet également de ne pas imager les bords des patchs situés plus loin. On a représenté sur la figure 8 un assemblage 1 de patch 2 ainsi qu'une zone d'inspection 32 correspondant à l'image du patch 2 et de son pourtour 33.

Ensuite, le moyen de mise en œuvre du procédé effectue une étape 34 de détection des défauts de pose du patch 2 par identification de différences d'épaisseur de patch 2 sur la surface à draper 13. La détection de défauts s'effectue à partir de l'au moins une image obtenue à l'étape 31 d'acquisition précédente.

En effet, lors d'un recouvrement, d'un repli, ou d'une absence de recouvrement, l'épaisseur de la couche de patch 2 sur la surface à draper 13 varie, et il est possible d'identifier les défauts d'épaisseur par une méthode colorimétrique en deux dimensions et/ou par une méthode de mesure en trois dimensions.

Une fois les défauts détectés, on effectue une étape 35 de cartographie des défauts de pose du patch 2 afin de pouvoir corriger les défauts et/ou de mettre en place une action corrective visant à ne plus reproduire le défaut à l'avenir.

En particulier, on effectue optionnellement une étape 36 de transmission et d'alerte de la présence de défauts à un opérateur ou à l'automate de rectification des défauts.

Dans un mode de mise en œuvre, l'étape 34 de détection des défauts de pose du patch par identification de différences d'épaisseur de patch 2 sur la surface à draper 13 s'effectue par une méthode colorimétrique et comprend l'analyse des nuances de gris de l'image obtenue à l'issue de l'étape 31 d'acquisition. Ce mode de mise en œuvre n'est possible que pour un matériau de patch translucide dans le visible ou à la longueur d'onde d'observation de la caméra, par exemple translucide dans l'infrarouge. Le recouvrement ou l'absence de recouvrement donne une teinte différente au patch, généralement plus foncé dans les zones de recouvrement. Une analyse par correspondance des nuances de gris à une épaisseur de patch 2 donnée permet donc de détecter les défauts de pose du patch 2.

Dans un autre mode de mise en œuvre, compatible avec le mode de mise en œuvre précédent, l'étape 34 de détection des défauts de pose du patch 2 par identification de différences d'épaisseur de patch sur la surface à draper s'effectue par une méthode de mesure en trois dimensions. Ce mode de mise en œuvre est particulièrement avantageux lorsque le matériau du patch est opaque et où la méthode par étude des nuances de gris n'est pas applicable. Ce mode de mise en œuvre nécessite des étapes supplémentaires avant l'étape 34 de détection des défauts.

Dans ce mode de mise en œuvre, on acquiert au moins deux images avec une direction de prise de vue différente lors de l'étape 31 d'acquisition. Les positions du moyen de contrôle optique 15 sont néanmoins connues lors des au moins deux prises de vue. Cela permet de pouvoir reconstituer par triangulation la zone d'inspection 32 en trois dimensions.

Ainsi, on effectue ensuite une étape 37 de reconstruction du patch 2 imagé et de son pourtour 33, zone également appelée zone d'inspection 32, en un nuage de points en trois dimensions à partir des images acquises. Un moyen de contrôle optique 15 particulièrement adapté pour acquérir des images pour ce mode de mise en œuvre est une caméra stéréoscopique. Dans le cas d'une acquisition d'images par stéréoscopie, on obtient un jeu de données comprenant au moins deux images gauche et droite de la même scène. L'étape 37 de reconstruction est réalisée à l'aide d'algorithmes de reconstruction en trois dimensions à partir d'images. Le nuage de points constitue une cartographie de la zone d'inspection et consiste en une liste de coordonnées (X,Y,Z). La résolution du nuage de points devra être à minima de la valeur de la largeur de tolérance divisé par vingt. Cela permettra d'avoir une densité de point suffisante dans la zone d'inspection 32.

Puis, une étape 38 de recherche de bords du patch 2 est effectuée dans la reconstruction en nuage de point. L'étape 38 de recherche de bords est réalisée avec des algorithmes de détection de coins ou des algorithmes de segmentation qui permettent de définir des ensembles de points dans le nuage de points.

Les bords du patch 2 étant identifiés, une étape 39 d'extraction de profils en coupe des bords du patch 2 imagé est effectuée. Par exemple, trois profils en coupe sont réalisés régulièrement pour chaque côté de patch, afin de pouvoir détecter des défauts dans différentes zones de chaque côté de patch 2.

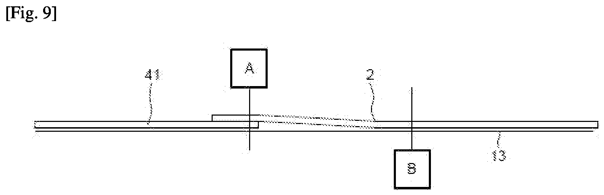

Les profils sont ensuite lissés dans une étape 40 afin de transformer le profil de point en une courbe exploitable pour une analyse de pente. Un exemple de profil lissé de bord de patch avec recouvrement est illustré à la figure 9. Sur la figure 9, le point A correspond à la partie du patch 2 recouvrant un patch adjacent 41 tandis que le point B correspond à la partie du patch recouvrant la surface à draper 13.

On effectue ainsi une analyse itérative de la pente de ces profils de manière à créer des données d'épaisseur de patch 2 sur la surface à draper 13. L'analyse de la pente s'effectue par exemple par réalisation de la dérivée de la courbe des profils lissés. Si la dérivée est supérieure à un seuil prédéfini, on considère qu'il y a un changement d'épaisseur et on attribue une épaisseur à la zone concernée.

Cette analyse par utilisation de la dérivée et attribution d'une donnée d'épaisseur à une zone permet donc de détecter les défauts de pose du patch lors de l'étape 34 de détection des défauts. En effet, selon les valeurs de la dérivée, un recouvrement ou une absence de recouvrement sont identifiés. Le recouvrement se caractérise par exemple par une variation positive puis négative du profil. Une absence de recouvrement produit à l'inverse une variation négative puis positive du profil.

Ce mode de mise en œuvre est enfin suivi de l'étape 35 de cartographie des défauts.

## Revendications

1. Procédé automatique de contrôle de l'application d'un patch tel qu'il comprend les étapes suivantes :
- Pose (étape 30) d'un patch (2) sur une surface à draper (13) au moyen d'un préhenseur (12) et avec recouvrement partiel des patchs adjacents ou sans recouvrement ;
- Acquisition (étape 31) par un moyen de contrôle optique (15) d'au moins une image du patch (2) posé ;
- Détection (étape 34) des défauts de pose du patch (2) par identification de différences d'épaisseur de patch sur la surface à draper (13) à partir de l'au moins une image du patch posé ;
- Cartographie (étape 35) des défauts de pose du patch.

2. Procédé selon la revendication 1, dans lequel l'étape (31) d'acquisition d'au moins une image du patch (2) posé s'effectue avec un moyen de contrôle optique (15) ayant un angle de champ plus large que l'angle de champ nécessaire à l'imagerie du patch seul, ou réalisant une image d'angle de champ plus large que l'angle de champ nécessaire à l'imagerie du patch (2) seul par balayage.

3. Procédé selon l'une des revendications 1 et 2, comprenant en outre une étape (36) de transmission et d'alerte d'un opérateur ou d'un automate de rectification des défauts après l'étape (35) de cartographie des défauts.

4. Procédé selon l'une quelconque des revendications 1 à 3, comprenant en outre les étapes suivantes :
- Acquisition d'au moins deux images avec une direction de prise de vue différente lors de l'étape (31) d'acquisition d'au moins une image du patch (2) posé ;
- Reconstruction (étape 37) du patch (2) imagé et de son pourtour (33) en nuage de points en trois dimensions à partir des au moins deux images du patch posé obtenues à l'étape (31) d'acquisition, l'étape (37) de reconstruction étant effectuée avant l'étape (34) de détection des défauts de pose du patch (2) ;
- Recherche (étape 38) de bords du patch (2) imagé dans la reconstruction en nuage de points en trois dimensions, l'étape (38) de recherche de bords étant effectuée avant l'étape (34) de détection des défauts de pose du patch ;
- Extraction (étape 39) de profils en coupe de deux dimensions des bords du patch imagé, l'étape (39) d'extraction de profils étant effectuée avant l'étape de détection des défauts de pose du patch ;
- Lissage (étape 40) des profils en coupe de deux dimension et analyse itérative de la pente de ces profils de manière à créer des données d'épaisseur de patch sur la surface à draper (13), cette étape (40) de lissage étant effectuée avant l'étape (34) de détection des défauts de pose du patch (2).

5. Procédé selon l'une quelconque des revendications 1 à 4, dans lequel l'étape (34) de détection des défauts de pose du patch (2) par identification de différences d'épaisseur de patch sur la surface à draper (13) comprend l'analyse par correspondance des nuances de gris de l'au moins une image du patch posé à une épaisseur de patch.

6. Système (10 ; 20) de contrôle de l'application d'un patch sur une surface à draper (13) comprenant un préhenseur (12) apte à saisir le patch (2) et le déposer sur la surface à draper (13), tel qu'il comprend un moyen de contrôle optique (15) de la conformité de la pose d'un patch (2) sur la surface à draper (13) et un moyen de mise en œuvre (14) du procédé selon l'une quelconque des revendications 1 à 5.

7. Système selon la revendication 6, comprenant un bras (11) articulé et une tête (16) portée par le bras (11) articulé, la tête (16) comprenant le préhenseur (12) et le moyen de contrôle optique (15).

8. Système selon la revendication 6, comprenant un premier bras (21) articulé comprenant une première tête (22) et un second bras (23) portant une seconde tête (24), les première et seconde têtes (22 ; 24) comprenant l'une le préhenseur (12) et l'autre le moyen de contrôle optique (15).

9. Système selon la revendication 6, dans lequel le moyen de contrôle optique (15) est monté sur un poteau, ou au plafond, et/ou sur des rails, et/ou sur une structure mobile située au-dessus de la surface à draper (13).

10. Système selon l'une quelconque des revendications 6 à 9, dans lequel le moyen de contrôle optique (15) est un capteur laser ou un capteur à lumière blanche ou une caméra visible ou une caméra stéréoscopique ou un capteur plénoptique ou une caméra infrarouge.

## Patentansprüche

1. Automatisches Verfahren zur Kontrolle des Anbringens eines Patches, das die folgenden Schritte umfasst:
- Anlegen (Schritt 30) eines Patches (2) auf einer zu drapierenden Oberfläche (13) mittels eines Greifers (12), wobei angrenzende Patches teilweise abgedeckt oder ohne Abdeckung sind;
- Erfassen (Schritt 31), durch ein optisches Kontrollmittel (15), mindestens eines Bildes des aufgelegten Patches (2);
- Erkennen (Schritt 34) von Fehlern beim Anlegen des Patches (2) durch Identifizieren von Unterschieden in der Dicke des Patches auf der zu drapierenden Oberfläche (13) anhand des mindestens einen Bildes des angelegten Patches;
- Kartierung (Schritt 35) der Fehler bei dem Anlegen des Patches.

2. Verfahren nach Anspruch 1, wobei der Schritt (31) des Erfassens mindestens eines Bildes des angelegten Patches (2) mit einem optischen Kontrollmittel (15) durchgeführt wird, das einen größeren Feldwinkel aufweist als der für die Bildgebung des Patches allein erforderliche Feldwinkel, oder indem ein Bild erzeugt wird, das einen größeren Feldwinkel aufweist als der für die Bildgebung des Patches (2) allein durch Scannen erforderliche Feldwinkel.

3. Verfahren nach einem der Ansprüche 1 und 2, ferner umfassend einen Schritt (36) des Übermittelns an und Warnens eines Bedieners oder eines Automaten zur Fehlerbehebung nach dem Schritt (35) der Fehlerkartierung.

4. Verfahren nach einem der Ansprüche 1 bis 3, ferner umfassend die folgenden Schritte:
- Erfassen von mindestens zwei Bildern mit unterschiedlicher Aufnahmerichtung während des Schritts (31) des Erfassens von mindestens einem Bild des angelegten Patches (2);
- Rekonstruieren (Schritt 37) des abgebildeten Patches (2) und seiner Umrandung (33) als dreidimensionale Punktwolke aus den mindestens zwei Bildern des angelegten Patches, die im Erfassungsschritt (31) erhalten wurden, wobei der Rekonstruktionsschritt (37) vor dem Schritt (34) von Fehlern beim Anlegen des Patches (2) durchgeführt wird;
- Suchen (Schritt 38) nach Rändern des in der dreidimensionalen Punktwolkenrekonstruktion abgebildeten Patches (2), wobei der Schritt (38) des Suchens nach Rändern vor dem Schritt (34) des Erkennen von Fehlern beim Anlegen des Patches durchgeführt wird;
- Extrahieren (Schritt 39) von zweidimensionalen Schnittprofilen der Ränder des abgebildeten Patches, wobei der Schritt (39) des Extrahierens von Profilen vor dem Schritt des Erkennens von Fehlern beim Anlegen des Patches durchgeführt wird;
- Glätten (Schritt 40) der zweidimensionalen Schnittprofile und iterative Analyse der Steigung dieser Profile, um Daten über die Dicke des Patches auf der zu drapierenden Oberfläche (13) zu erstellen, wobei dieser Glättungsschritt (40) vor dem Schritt (34) des Erkennens von Fehlern beim Anlegen des Patches (2) durchgeführt wird.

5. Verfahren nach einem der Ansprüche 1 bis 4, wobei der Schritt (34) des Erkennens von Fehlern beim Anlegen des Patches (2) durch Identifizieren von Unterschieden in der Dicke des Patches auf der zu drapierenden Oberfläche (13) das Abgleichen der Graustufen des mindestens einen Bildes des angelegten Patches mit einer Dicke des Patches umfasst.

6. System (10; 20) zur Kontrolle des Anbringens eines Patches auf einer zu drapierenden Oberfläche (13), umfassend einen Greifer (12), der in der Lage ist, das Patch (2) zu greifen und auf der zu drapierenden Oberfläche (13) abzulegen, so dass es ein optisches Kontrollmittel (15) zur Kontrolle der Übereinstimmung des Anlegens eines Patches (2) auf der zu drapierenden Oberfläche (13) und ein Durchführungsmittel (14) des Verfahrens nach einem der Ansprüche 1 bis 5 umfasst.

7. System nach Anspruch 6, umfassend einen gelenkigen Arm (11) und einen vom gelenkigen Arm (11) getragenen Kopf (16), wobei der Kopf (16) den Greifer (12) und das optische Kontrollmittel (15) umfasst.

8. System nach Anspruch 6, umfassend einen ersten gelenkigen Arm (21), der einen ersten Kopf (22) und einen zweiten Arm (23) umfasst, der einen zweiten Kopf (24) trägt, wobei jeweils einer des ersten und des zweiten Kopfs (22; 24) den Greifer (12) und der andere das optische Kontrollmittel (15) umfassen.

9. System nach Anspruch 6, wobei das optische Kontrollmittel (15) an einem Pfosten oder an der Decke und/oder an Schienen und/oder an einer beweglichen Struktur oberhalb der zu drapierenden Oberfläche (13) montiert ist.

10. System nach einem der Ansprüche 6 bis 9, wobei das optische Kontrollmittel (15) ein Lasersensor oder ein Weißlichtsensor oder eine sichtbare Kamera oder eine stereoskopische Kamera oder ein plenoptischer Sensor oder eine Infrarotkamera ist.

## Claims

1. Automatic method for controlling the application of a patch such that it comprises the following steps:
- positioning (step 30) a patch (2) on a surface (13) to be covered by means of a gripper (12) and with partial covering of the adjacent patches or without covering;
- acquisition (step 31) by an optical control means (15) of at least one image of the positioned patch (2);
- detecting (step 34) the defects in positioning the patch (2) by identifying differences in patch thickness on the surface (13) to be covered from the at least one image of the positioned patch;
- mapping (step 35) the defects in positioning the patch.

2. Method according to claim 1, wherein the step (31) of acquiring at least one image of the positioned patch (2) is carried out with an optical control means (15) having a wider field angle than the field angle necessary for imaging the patch alone, or producing a wider field angle image than the field angle necessary for imaging the patch (2) simply by scanning.

3. Method according to either of claims 1 or 2, further comprising a step (36) of transmitting and alerting an operator or a defect rectification automaton after the defect mapping step (35).

4. Method according to any one of claims 1 to 3, further comprising the following steps:
- acquiring at least two images with a different viewing direction during the step (31) of acquiring at least one image of the patch (2) positioned;
- reconstructing (step 37) the imaged patch (2) and its perimeter (33) in a three-dimensional point cloud from the at least two images of the positioned patch obtained in the acquisition step (31), the reconstructing step (37) being carried out before the step (34) of detecting the defects in positioning the patch (2);
- searching (step 38) for edges of the patch (2) imaged in the three-dimensional point cloud reconstruction, the step (38) of searching for edges being carried out before the step (34) of detecting the defects in positioning the patch;
- extracting (step 39) two-dimensional sectional profiles of the edges of the imaged patch, the step (39) of extracting profiles being carried out before the step of detecting the defects in positioning the patch;
- smoothing (step 40) the two-dimensional cross-sectional profiles and iterative analysis of the slope of these profiles so as to create patch thickness data on the surface to be covered (13), this smoothing step (40) being carried out before the step (34) of detecting defects in positioning the patch (2).

5. Method according to any one of claims 1 to 4, wherein the step (34) of detecting defects in positioning the patch (2) by identifying differences in patch thickness on the surface to be covered (13) comprises matching analysis of the grey shades of the at least one image of the patch positioned at a patch thickness.

6. System (10; 20) for controlling the application of a patch onto a surface (13) to be covered comprising a gripper (12) capable of grasping the patch (2) and depositing it over the surface (13) to be covered, such that it comprises an optical control means (15) for controlling the conformity of the positioning of a patch (2) on the surface (13) to be covered and a means (14) for implementing the method according to any one of claims 1 to 5.

7. System according to claim 6, comprising an articulated arm (11) and a head (16) supported by the articulated arm (11), the head (16) comprising the gripper (12) and the optical control means (15).

8. System according to claim 6, comprising a first articulated arm (21) comprising a first head (22) and a second arm (23) carrying a second head (24), the first and second heads (22; 24) comprising in one case the gripper (12) and in the other case the optical control means (15).

9. System according to claim 6, wherein the optical control means (15) is mounted on a post, or on the ceiling, and/or on rails, and/or on a movable structure located above the surface to be covered (13).

10. System according to any one of claims 6 to 9, wherein the optical control means (15) is a laser sensor or a white light sensor or a visible camera or a stereoscopic camera or a plenoptic sensor or an infrared camera.
